(19) **Europäisches Patentamt European Patent Office Office européen des brevets**

(11) **EP 3 238 840 B1**

(12) **EUROPEAN PATENT SPECIFICATION**

(45) Date of publication and mention of the grant of the patent:
**23.09.2020 Bulletin 2020/39**

(21) Application number: **15872554.9**

(22) Date of filing: **17.11.2015**

(51) Int Cl.:
**B09B 3/00** *(2006.01)* **C02F 3/34** *(2006.01)*
**C08J 11/16** *(2006.01)* **H01M 8/16** *(2006.01)*

(86) International application number:
**PCT/JP2015/082281**

(87) International publication number:
**WO 2016/103985 (30.06.2016 Gazette 2016/26)**

(54) **METHOD FOR RECYCLING USED ABSORBENT ARTICLE**

RECYCLING-VERFAHREN FÜR GEBRAUCHTEN SAUGFÄHIGEN ARTIKEL

PROCÉDÉ DE RECYCLAGE D'ARTICLE ABSORBANT USÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014266606**
**24.09.2015 JP 2015187062**

(43) Date of publication of application:
**01.11.2017 Bulletin 2017/44**

(73) Proprietor: **Unicharm Corporation**
**Ehime 799-0111 (JP)**

(72) Inventors:
• **KONISHI, Takayoshi**
**Kanonji-shi**
**Kagawa 769-1602 (JP)**

• **HIRAOKA, Toshio**
**Kanonji-shi**
**Kagawa 769-1602 (JP)**

(74) Representative: **Dolleymores**
**9 Rickmansworth Road**
**Watford, Hertfordshire WD18 0JU (GB)**

(56) References cited:
WO-A1-2012/039464    WO-A2-2013/144660
JP-A- H 091 167    JP-A- H0 929 285
JP-A- 2001 047 023    JP-A- 2001 310 178
JP-A- 2006 272 203    JP-A- 2009 231 229
JP-A- 2013 145 660    JP-A- 2013 145 660
JP-A- 2013 197 047    JP-A- 2014 217 835
JP-A- 2014 217 835    US-A1- 2006 147 763
US-A1- 2009 142 627    US-A1- 2014 030 555

**Description**

TECHNICAL FIELD

The present invention relates to a method for recycling a used absorbent article in which at least one of materials constituting the absorbent article is collected and recycled from the used absorbent article.

BACKGROUND ART

WO 2006/134941 A1 discloses a method for recycling used disposable diapers, which in addition to enabling used disposable diapers to be effectively recycled for use as recycled materials, is able to flexibly contribute to a reduction of $CO_2$ emissions in comparison with the case of treating used disposable diapers without recycling. This recycling method is characterized in that, (1) disposable diapers containing large amounts of moisture such as waste are crushed while mixing with fermentative bacteria, (2) materials such as excrement and pulp are subjected to microbial fermentative decomposition followed by promotion of fermentation and drying of residual moisture by a first heating step, (3) the resulting material is subjected to heat sterilization and drying of residual moisture by carrying out a second heating step following completion of fermentation to generate a recycled material, and (4) thermal energy is recovered and recycled by using the recycled material as a combustible material (solid fuel).

Prior Art Documents

Patent Documents

Patent Document 1: International Publication No. WO 2006/134941 A1
Methods and apparatuses for sterilizing and recovering materials from used disposable diapers are known from JP 2001047023 A, JP 2014217835 A and JP 2006272203.
The use of microbial fuel cells for the treatment of wastewater is known from WO 2013/144660 A2, WO 2012/039464 A1, JP 2013145660 A and US 2006/147763 A1.

SUMMARY OF THE INVENTION

PROBLEMS TO BE SOLVED BY THE INVENTION

However, the method described in WO 2006/134941 A1 has the shortcomings of (1) requiring mixing with a fermentative bacteria along with equipment and labor for stocking, storing and adjusting the added amount of the fermentative bacteria, (2) requiring a large amount of thermal energy to promote fermentation and drying, (3) requiring drying to a temperature of about 100°C for heat sterilization and drying of residual moisture, requiring a large amount of thermal energy for drying from a moisture content of 65% to a moisture content of 5%, requiring safety measures to accommodate high temperatures (in terms of both insulation and heat resistance), requiring equipment for processing the large amount of odorous steam generated during heating, and having a high potential for becoming oversized, excessively complex and having high running costs, and (4) difficulty in applying to recycling at ordinary homes or facilities not equipped with the proper equipment due to the product being in the form of solid fuel, as well as the generation of $CO_2$ attributable to combustion-based recycling and the application thereof being limited to thermal recycling.

MEANS FOR SOLVING THE PROBLEMS

As a result of focusing on the problems of the prior art as described above, the present invention solves the aforementioned problems by separating an absorbent article (such as a disposable diaper) containing waste into recyclable pulp fibers and a treatment wastewater containing plastic/non-woven components and waste, treating the treatment wastewater containing heretofore worthless waste by microbial decomposition using a microbial fuel cell while recovering electric power from the microorganisms, and recycling the electric power as electrical energy.
The present invention provides the method for recycling a used absorbent article of independent claim 1. The dependent claims specify preferred but optional features.
In the method at least one of materials constituting the absorbent article is collected and recycled from the used absorbent article, wherein the method comprises an ozone treatment step of treating a used absorbent article with ozone water; an ozone concentration adjustment step of adjusting an ozone concentration of wastewater from the ozone treatment step to 0.1 ppm or less; and a microbial fuel cell step of introducing the ozone concentration-adjusted wastewater into a microbial fuel cell to reduce TOC concentration in the wastewater and collect electric power by power generation.

The aforementioned method further comprises a step of adjusting pH of the wastewater from the ozone treatment step to 2.0 to 7.0.

The pH of wastewater from the microbial fuel cell step is preferably lower than 8.0.

The method preferably further comprises a step of adjusting a TOC concentration of the wastewater from the ozone treatment step to 10,000 mg/L or less.

A TOC concentration of the wastewater from the microbial fuel cell step is preferably 2000 mg/L or less.

EFFECTS OF THE INVENTION

According to the present invention, a system capable of completely recycling used absorbent articles can be realized that is able to purify water quality while simultaneously collecting electric power by power generation from recycling treatment water containing waste that was conventionally not recycled and primarily responsible for the increased burden on purification treatment. As a result of supplying organic matter present in treatment wastewater (such as waste, chemicals, decomposed SAP or pulp microfibers) as food in an environment that allows microorganisms to act efficiently, the activity of the microorganisms can be enhanced and residual organic matter previously disposed of as recycling residue can be recycled in the form of electric power by collecting electric power from the microorganisms that have grown as a result thereof. Although conventional microbial treatment consists mainly of aerobic treatment and requires a supply of air through aeration, since microbial fuel cells employ anaerobic treatment, aeration is not required and running energy costs are low.

BRIEF DESCRIPTION OF THE DRAWINGS

FIG. 1 is a recycling system flow chart that incorporates the method of the present invention.

FIG. 2 is a schematic diagram of a microbial fuel cell.

FIG. 3 indicates the results of electric current generation and water quality purification (reduction of TOC) in treatment by a microbial fuel cell of the examples.

MODE FOR CARRYING OUT THE INVENTION

The present invention relates to a method for recycling used absorbent articles in which at least one type of material composing the aforementioned used absorbent articles is collected and recycled from the used absorbent articles.

There are no particular limitations on the absorbent articles, and examples thereof include disposable diapers, urinary incontinence pads, urine collection pads, sanitary napkins and panty liners. Among these, urinary incontinence pads and disposable diapers collected in bulk at health care facilities and other such institutions are preferable from the viewpoint of eliminating the bother associated with sorting and containing a comparatively large amount of pulp.

Absorbent articles are usually composed of materials such as pulp fibers, superabsorbent polymers, non-woven fabric, plastic film and rubber. Namely, materials that compose absorbent articles (to also be referred to as "constituent materials") refer to pulp fibers, superabsorbent polymers, non-woven fabric, plastic film and rubber. Although at least one type of material that composes absorbent articles refers to pulp fibers, superabsorbent polymers, non-woven fabric, plastic film and rubber, it preferably refers to at least one type of material selected from the group consisting of pulp fibers, non-woven fabric and plastic film, and more preferably refers to pulp fibers. Although the following provides an explanation that mainly uses the example of collecting pulp fibers, the present invention is not limited thereto.

There are no particular limitations on the pulp fibers, and examples thereof include fluff pulp fibers and chemical pulp fibers.

Superabsorbent polymers are abbreviated as SAP, and refer to polymers having a three-dimensional mesh structure consisting of suitably crosslinked watersoluble polymers that are essentially water-insoluble despite being able to absorb several tens to several hundred times their weight in water, do not release the water once it has been absorbed even if subjected to a certain degree of pressure, and examples thereof include starch-based, acrylic acid-based and amino acid-based particulate and fibrous polymers.

Examples of non-woven fabric include spunlace and air-through non-woven fabric formed from fibers such as rayon or other cellulose fibers or thermoplastic resin fibers.

Examples of plastic film include polyolefin film (such as polypropylene film) and polyester film (such as polyethylene terephthalate film).

Examples of rubber include natural rubber, synthetic rubber, and elastic fibers such as spandex fibers.

The method of the present invention includes an ozone treatment step for treating a used absorbent article with ozone water.

In this step, superabsorbent polymer contained in the used absorbent article is decomposed, reduced in molecular weight and solubilized. Here, the state in which the superabsorbent polymer is decomposed, reduced in molecular weight and solubilized refers to a state in which the resulting superabsorbent polymer is able to pass through a 2 mm wire mesh screen. Namely, in this step, the superabsorbent polymer is decomposed to a degree that it is able to pass through a 2 mm wire mesh screen.

The ozone water used in this step refers to water in which ozone has been dissolved therein. Ozone water can be prepared using, for example, an ozone water generator (such as the Model OS-25V Ozone Generator manufactured by Mitsubishi Electric Corp. or the Model ED-OWX-2 Ozone Water Exposure Tester manufactured by EcoDesign Inc.).

Although there are no particular limitations on the ozone concentration of the ozone water provided it is a concentration that enables decomposition of the superabsorbent polymer, it is preferably 1 to 50 ppm by weight, more preferably 2 to 40 ppm by weight and even more preferably 3 to 30 ppm by weight. If the ozone concentration is excessively low, the superabsorbent polymer cannot be completely solubilized resulting in the risk of superabsorbent polymer remaining in the collected and recycled constituent materials (such as pulp fibers). Conversely, if the ozone concentration is excessively high, since this results in an increase in oxidizing power, there is the risk of imparting damage to the collected and recycled constituent materials (such as pulp fibers) while also resulting in the risk of problems with safety.

There are no particular limitations on the duration of immersion in the ozone water provided the superabsorbent polymer can be decomposed. The duration of immersion in the ozone water becomes shorter as the ozone concentration of the ozone water becomes higher, while a longer period of time is required as the ozone concentration of the ozone water becomes lower.

The product of the ozone concentration (ppm) of the ozone water and the duration of immersion in the ozone water (min) (to also be referred to as the "CT value") is preferably 100 to 6000 ppm-min, more preferably 200 to 4800 ppm-min and even more preferably 300 to 3600 ppm-min. If the CT value is excessively low, the superabsorbent polymer is unable to be completely solubilized resulting in the risk of superabsorbent polymer remaining in the collected and recycled constituent materials (such as pulp fibers). Conversely, if the CT value is excessively high, there is the risk of damage to the collected and recycled constituent materials (such as pulp fibers), reduced safety and increased manufacturing costs.

The duration of immersion in the ozone water is dependent on the ozone concentration of the ozone water as was previously described, and is preferably 5 to 120 minutes, more preferably 10 to 100 minutes, and even more preferably 20 to 80 minutes.

Although there are no particular limitations on the amount of ozone water provided it is an amount that enables decomposition of the superabsorbent polymer, it is preferably 300 to 5000 parts by weight, more preferably 500 to 4000 parts by weight, and even more preferably 800 to 3000 parts by weight based on 100 parts by weight (dry weight) of the used absorbent article. If the amount of ozone water is excessively low, the superabsorbent polymer is unable to be completely solubilized resulting in the risk of superabsorbent polymer remaining in the collected and recycled constituent materials (such as pulp fibers). Conversely, if the amount of ozone water is excessively high, there is the risk of an increase in manufacturing costs.

In the ozone treatment step, there are no particular limitations on the method used to immerse the used absorbent article in the ozone water, and for example, ozone water may be placed in a container followed by placing the used absorbent article in the ozone water. The content of the container may or may not be agitated during the time the used absorbent article is immersed in the ozone water. In addition, a weak flow may be generated in the ozone water by the rise of bubbles of ozone gas as the ozone gas is blown into the ozone water contained in the container. There are no particular limitations on the temperature of the ozone water provided it is a temperature that allows decomposition of the superabsorbent polymer. The ozone water may be heated or left at room temperature.

In the ozone treatment step, the superabsorbent polymer is subjected to oxidative decomposition by ozone, which disrupts the three-dimensional mesh structure of the superabsorbent polymer and causes the superabsorbent polymer to lose its water retentiveness, decrease in molecular weight and become solubilized. As a result of increasing in fluidity, the superabsorbent polymer dissolves in the ozone water. In addition, since the hot melt adhesive used in the seams and so forth of the absorbent article also undergoes oxidative decomposition by the ozone water, the bonding strength between constituent materials of the absorbent article weakens. Moreover, in this step, the used absorbent article is initially disinfected, or the collected and recycled constituent materials (such as pulp fibers) are disinfected, bleached and deodorized, by the disinfecting action of ozone.

The ozone water is preferably acidic. The pH of the ozone water is preferably 2.5 or lower, more preferably 0.5 to 2.5 and even more preferably 1.0 to 2.4. The use of acidic ozone water makes it possible to inhibit initial swelling of the superabsorbent polymer due to absorption of water, thereby dramatically improving the effect of the ozone on decomposition and removal of the superabsorbent polymer. Namely, the superabsorbent polymer can be decomposed in a short period of time. In addition, treating with acidic ozone water makes it possible to impart disinfecting effects attributable to the acid. Incidentally, the principle of inhibition of swelling of the superabsorbent polymer due to absorption of water is thought to be that, since negatively charged carboxyl groups in an acidic aqueous solution are neutralized by positively charged hydrogen ions, the ionic repulsive force of the carboxyl groups weakens resulting in a decrease in water retention capacity. If the pH of the ozone water is excessively low, there is the risk of a decrease in the water absorption capacity of the pulp fibers in the case the collected and recycled constituent materials are pulp fibers. Although the reason for the decrease in water retention capacity of the pulp fibers when the pH is excessively low is not clear, it is thought to be the result of degeneration of the pulp fibers per se.

Acidic ozone water can be prepared by adding acid to ozone water.

Although there are no particular limitations on the acid and an inorganic acid or organic acid can be used, an organic acid is preferable. Organic acids are preferable from the viewpoint of their safety and environmental burden since they only function within the range of weak acidity and are friendly to the environment. There are no particular limitations on the organic acid and examples thereof include tartaric acid, glycolic acid, malic acid, citric acid, succinic acid, acetic acid and ascorbic acid.

The pH of acidic ozone water can be adjusted according to the type and amount of acid added. Although there are no particular limitations on the concentration of organic acid present in acidic ozone water provided the pH thereof is within the prescribed range, it is preferably 0.1% by weight to 5.0% by weight, more preferably 0.2% by weight to 3.0% by weight and even more preferably 0.5% by weight to 2.0% by weight.

In addition, as a result of using organic acid to make the pH to be 2.5 or lower, it is possible to enhance disinfecting effects on the inside of disposable diapers for which direct contact with ozone gas is particularly difficult.

The pH of the ozone water may change when a used absorbent article is added to the ozone water. In the case the pH of the ozone water differs between that before and that after the addition of a used absorbent article, pH of the ozone water as referred to here refers to the pH of the ozone water following addition of the used absorbent article.

The pH can be adjusted by, for example, placing the used absorbent article and ozone water in a treatment tank, adding acid thereto while agitating, and discontinuing the addition of acid at the point the pH of the solution in the treatment tank reaches the prescribed pH.

Following completion of ozone treatment, the used absorbent article is separated into used absorbent article that has been removed of superabsorbent polymer and wastewater. The wastewater contains decomposition products of the superabsorbent polymer, waste and fine pulp. This wastewater is hereinafter referred to as "wastewater from the ozone treatment step". There are no particular limitations on the method used for separating into used absorbent article and wastewater. For example, a plug may be provided in the bottom of a container and the plug may be removed to discharge only the wastewater, or the used absorbent article may be removed from the container followed by discharging the ozone water from the container. When discharging the ozone water, the ozone water is discharged by passing through, for example, a 2 mm wire mesh screen.

The method of the present invention includes an ozone concentration adjustment step for adjusting the ozone concentration of the wastewater from the ozone treatment step to 0.1 ppm by weight or less. The ozone concentration of ozone water introduced into a microbial fuel cell is 0.1 ppm by weight or less, preferably 0 to 0.05 ppm by weight and even more preferably 0 to 0.01 ppm by weight. Since microorganisms in the subsequent microbial fuel cell step end up dying if the ozone concentration is excessively high, the ozone concentration is adjusted to 0.1 ppm or less to protect the microorganisms.

There are no particular limitations on the method used to reduce ozone concentration, and examples thereof include dilution with water, addition of a reducing agent (such as silica, alumina, manganese dioxide, ferrous oxide or nickel oxide), activated charcoal adsorption, thermal decomposition, alkaline cleaning and chemical reduction using sodium sulfite.

In the case the ozone concentration of the wastewater from the ozone treatment step is 0.1 ppm by weight or less at completion of ozone treatment, the providing of a separate step for reducing ozone concentration is not required. In actuality, regardless of whether or not the ozone concentration is adjusted, this embodiment is within the scope of the present invention as long as the ozone concentration of wastewater introduced into the microbial fuel cell is 0.1 ppm by weight or less.

The pH of the wastewater from the ozone treatment step is within the range of 2.0 to 7.0. If the pH is excessively low, there is the risk of microorganisms dying in the subsequent microbial fuel cell step. If the pH is excessively high, there is the risk of a decrease in power generation efficiency in the subsequent microbial fuel cell step. Namely, the method of the present invention includes a step for adjusting the pH of the wastewater from the ozone treatment step to within the range of 2.0 to 7.0. The pH can be adjusted by adding acid or base to the wastewater. The step for adjusting pH can be carried out simultaneous to the aforementioned ozone concentration adjustment step. Namely, both ozone concentration and pH may be adjusted in the ozone concentration adjustment step.

The TOC concentration of wastewater from the ozone treatment step is preferably 10,000 mg/L or less, more preferably 100 to 5000 mg/L and even more preferably 300 to 3000 mg/L. If the TOC concentration is excessively high, there is the risk of a decrease in treatment time efficiency of the subsequent microbial fuel cell step. If the TOC concentration is excessively low, there is the risk of a shortage of nutrients for the microorganisms in the subsequent microbial fuel cell step resulting in a decrease in microbial activity. Namely, the method of the present invention includes a step for adjusting the TOC concentration of the wastewater from the ozone treatment step to 10,000 mg/L or less. TOC concentration can be adjusted by diluting the wastewater from the ozone treatment step with water. The step for adjusting TOC concentration can be carried out simultaneous to the aforementioned ozone concentration adjustment step. Namely, both ozone concentration and TOC concentration may be adjusted in the ozone concentration adjustment step or the three parameters of ozone concentration, pH and TOC concentration may all be adjusted in the ozone concentration adjustment step.

The method of the present invention includes a microbial fuel cell step for introducing wastewater for which ozone concentration has been adjusted into a microbial fuel cell to reduce TOC concentration in the wastewater while collecting electric power by power generation.

Here, a microbial fuel cell refers to a device that uses microorganisms to convert fuel in the form of organic matter into electrical energy. In a microbial fuel cell, a negative electrode and a positive electrode are immersed in a solution of a fuel in the form of organic matter, electrons generated when the organic matter is oxidatively decomposed by the microorganisms collect at the negative electrode, and those electrons migrate to the positive electrode via an external circuit where they are consumed by the reduction reaction of an oxidizing agent. Electrons flow due to the difference in oxidation-reduction potential between the chemical reaction that occurs at the negative electrode and the chemical reaction that occurs at the positive electrode, and an amount of energy equivalent to the product of the potential difference of both electrodes and the current flowing to the external circuit is obtained from an external circuit.

In the microbial fuel cell step, wastewater for which ozone concentration has been adjusted is introduced into a microbial fuel cell to reduce TOC concentration in the wastewater while collecting electric power by power generation. Within the microbial fuel cell, TOC concentration in the wastewater is reduced and electric power is generated by microorganisms as a result of oxidative decomposition of organic matter such as superabsorbent polymer decomposition products, waste and fine pulp contained in the wastewater for which ozone concentration has been adjusted.

Although there are no particular limitations on the microorganisms used in the microbial fuel cell provided they are able to contribute to generation of electrical energy in addition to oxidatively decomposing organic matter, primarily hydrogen-producing microorganisms are used, and among these, obligate anaerobic microorganisms and facultative anaerobic microorganisms are used preferably.

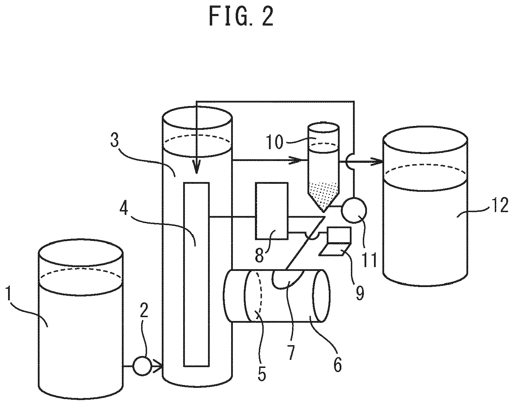

An example of the configuration of a microbial fuel cell used in the present invention is shown in FIG. 2. In the drawing, reference symbol 1 indicates an ozone treatment discharge tank, 2 a pump, 3 a negative electrode reaction tank, 4 a negative electrode, 5 a proton exchange membrane, 6 a positive electrode tank, 7 a positive electrode, 8 a tester, 9 a personal computer, 10 a sludge sedimentation tank, 11 a pump, and 12 a purified water tank.

The pH of wastewater from the microbial fuel cell step is preferably lower than 8.0. If the pH of wastewater from the microbial fuel cell step is excessively high, power generation efficiency of the microbial fuel cell step decreases.

The TOC concentration of wastewater from the microbial fuel cell step is preferably 2000 mg/L or less. If the TOC concentration of wastewater from the microbial fuel cell step is 2000 mg/L or less, purification treatment can be carried out easily in an ordinary purification tank and the like in a subsequent step. In addition, the TOC concentration of the wastewater is preferably 30 mg/L or less in the case of discharging wastewater directly from the microbial fuel cell step.

The method of the present invention may also include a decomposition step for decomposing a used absorbent article into pulp fibers and other materials by placing the used absorbent article in an aqueous solution containing polyvalent metal ions or an acidic aqueous solution having a pH of 2.5 or lower and subjecting the used absorbent article to physical force (to also be simply referred to as the "decomposition step").

In this step, the used absorbent article is decomposed into pulp fibers and other materials by allowing physical force to act on the used absorbent article.

Absorbent articles are usually composed of various materials such as pulp fibers, superabsorbent polymers, non-woven fabric, plastic film and rubber. In this decomposition step, the used absorbent article is decomposed into the aforementioned materials. The degree of decomposition is only required to be that which allows at least a portion of the pulp fibers to be recovered, and the used absorbent article is not required to be completely decomposed and may only be partially decomposed.

Here, there are no particular limitations on the method used to allow physical force to act on the used absorbent article, and examples thereof include agitation, beating, poking, vibrating, shredding, cutting and crushing. Among these, agitation is preferable. Agitation can be carried out in a treatment tank equipped with an agitator in the manner of a washing machine.

In the case the method of the present invention includes a decomposition step, although the treatment target in the subsequent ozone treatment step is not the used absorbent article per se, but rather an aggregate or portion thereof (such as pulp fibers) of constituent materials of the used absorbent article formed by decomposition of the used absorbent article, the case of treating these constituent materials is considered to be equivalent to the "ozone treatment step" as referred to in the present invention.

This decomposition step is carried out in an aqueous solution containing polyvalent metal ions or in an acidic aqueous solution of pH 2.5 or lower. The use of an aqueous solution containing polyvalent metal ions or an acidic aqueous solution of pH 2.5 or lower results in desiccation of the superabsorbent polymer that has swollen as a result of absorbing water in the used absorbent article.

Superabsorbent polymers have hydrophilic groups (such as -COO⁻ groups), and although they are able to absorb large amounts of water as a result of water molecules bonding to these hydrophilic groups via hydrogen bonds, when a superabsorbent polymer that has absorbed water is placed in an aqueous solution containing calcium ions or other polyvalent metal ions, the polyvalent metal ions bond to the hydrophilic groups (in the manner of, for example, -COO-Ca-OCO-), hydrogen bonds between the hydrophilic groups and water molecules are broken and the water molecules are released resulting in desiccation of the superabsorbent polymer. In addition, when a superabsorbent polymer that has absorbed water is placed in an acidic aqueous solution of pH 2.5 or lower, since the negatively charged hydrophilic groups (such as -COO⁻ groups) are neutralized by positively charged hydrogen ions ($H^+$) (resulting in the formation of, for example, COOH groups), the ionic repulsive force of the hydrophilic groups weakens resulting in a decrease in water retention capacity, which is thought to result in desiccation of the superabsorbent polymer.

Desiccation of the superabsorbent polymer facilitates separation of pulp fibers from the superabsorbent polymer. Although the superabsorbent polymer absorbs water and swells when the used absorbent article is attempted to be decomposed in ordinary water, resulting in an increase in the concentration of solids in the tank and a corresponding decrease in the treatment efficiency of the mechanical separation procedure, these problems can be avoided by placing the used absorbent article in an aqueous solution containing polyvalent metal ions or an aqueous solution of pH 2.5 or lower.

Examples of polyvalent metal ions that can be used include alkaline earth metal ions and transition metal ions.

Examples of alkaline earth metal ions include beryllium, magnesium, calcium, strontium and barium ions. Preferable examples of aqueous solutions containing alkaline earth metal ions include aqueous solutions of calcium chloride, calcium nitrate, calcium hydroxide, calcium oxide, magnesium chloride and magnesium nitrate, and among these, an aqueous calcium chloride solution is preferable.

There are no particular limitations on the transition metal ions provided they can be incorporated in the superabsorbent polymer, and examples thereof include iron, nickel and copper ions. Although examples of aqueous solutions containing transition metal ions include aqueous solutions of inorganic acid salts, organic acid salts and complexes of transition metals, from the viewpoints of cost and availability, aqueous solutions of inorganic acid salts or organic acid salts are preferable. Examples of inorganic acid salts include iron salts such as iron chloride, iron sulfate, iron phosphate or iron nitrate, cobalt salts such as cobalt chloride, cobalt sulfate, cobalt phosphate or cobalt nitrate, nickel salts such as nickel chloride or nickel sulfate, and copper salts such as copper chloride or copper sulfate. Examples of organic acid salts include iron lactate, cobalt acetate, cobalt stearate, nickel acetate and copper acetate.

In the case of using an aqueous solution containing polyvalent metal ions, an aqueous solution of a calcium compound is preferable in consideration of safety and price. Among calcium compounds, aqueous solutions of calcium compounds that are weakly alkaline and as close to neutral as possible are preferable to strongly alkaline calcium compounds such as calcium hydroxide or calcium oxide since the ozone used in the subsequent step decomposes at alkaline pH. Although there are no particular limitations on the pH of the aqueous solution containing polyvalent metal ions, it is preferably 11 or lower. In the case of using an alkaline compound, the pH of the aqueous solution is preferably higher than 7 but no higher than 11.

The amount of polyvalent metal ions is preferably 4 millimoles or less, more preferably 4.5 to 10 millimoles and even more preferably 5 to 8 millimoles per 1 g of superabsorbent polymer (dry weight). If the amount of polyvalent metal ions is excessively small, desiccation of the superabsorbent polymer is inadequate. If the amount of polyvalent metal ions is excessively large, the polyvalent metal salt is wasted resulting in an increase in treatment costs since excess polyvalent metal ions remain in the treatment solution without being incorporated by the superabsorbent polymer.

Although there are no particular limitations on the concentration of polyvalent metal ions in the aqueous solution containing polyvalent metal ions provided the polyvalent metal ions are incorporated into the superabsorbent polymer, it is preferably 10 to 1000 millimoles/liter, more preferably 50 to 700 millimoles/liter and even more preferably 200 to 400 millimoles/liter. If the concentration thereof is excessively low, desiccation of the superabsorbent polymer is inadequate. If the concentration is excessively high, the polyvalent metal ions are wasted resulting in an increase in treatment costs since excess polyvalent metal ions remain in the treatment solution without being incorporated by the superabsorbent polymer.

When using an aqueous calcium chloride solution for the aqueous solution containing polyvalent metal ions, although the concentration of calcium chloride is preferably 1% by weight or more, since there is no change in efficacy even if the concentration is increased to 10% by weight or more, the concentration is preferably within the range of 1% by weight to 10% by weight and more preferably within the range of 3% by weight to 6% by weight.

In the case of using an acidic aqueous solution, the pH of the acidic aqueous solution is 2.5 or lower, preferably 0.5 to 2.5 and even more preferably 1.0 to 2.4. If the pH is excessively high, there is the risk of inadequate desiccation of the superabsorbent polymer. If the pH is excessively low, there is the risk of damage to the collected pulp fibers due to strong acidity.

Although an aqueous solution of an inorganic acid or organic acid can be used for the acidic aqueous solution of pH 2.5 or lower provided the pH thereof is 2.5 or lower, in general, an aqueous solution of a highly stable organic acid is preferable. Examples of organic acids include tartaric acid, glycolic acid, malic acid, citric acid, succinic acid and acetic acid, with citric acid being preferable.

Although there are no particular limitations on the concentration of organic acid in the aqueous solution in the case of using an aqueous solution of an organic acid provided the pH thereof is 2.5 or lower, the concentration is preferably 0.1% by weight to 10.0% by weight, more preferably 0.5% by weight to 8.0% by weight and even more preferably 1.0% by weight to 5.0% by weight. If the concentration of organic acid is excessively low, there is the risk of inadequate desiccation of the superabsorbent polymer. If the concentration is excessively high, there is the risk of the organic acid being wasted.

The method of the present invention may also include a step for separating pulp fibers from a mixture of pulp fibers and other materials formed in the decomposition step (to also be simply referred to as the "separation step").

In the separation step, pulp fibers are separated from the mixture of pulp fibers and other materials (superabsorbent polymer, non-woven fabric, plastic film and rubber) formed due to decomposition of the used absorbent article. In this step, at least a portion of the pulp fibers are separated and recovered. All of the pulp fibers need not be recovered. In addition, other materials may be recovered with the pulp fibers. Although varying according to the separation method, at least a portion of the superabsorbent polymer is usually present together with the separated pulp fibers. For example, in a separation method that uses sieving, in the case of recovering the pulp fibers beneath the sieve, a large portion of the superabsorbent polymer is present together with the separated and recovered pulp fibers. In this step, decomposed constituent materials are preferably separated into a fraction containing pulp fibers and superabsorbent polymer and a fraction containing non-woven fabric, plastic film and rubber. However, a trace amount of non-woven fabric, plastic film and rubber may be contained in the fraction containing pulp fibers and superabsorbent polymer, or a trace amount of pulp fibers and superabsorbent polymer may be contained in the fraction containing non-woven fabric, plastic film and rubber.

There are no limitations on the method used to separate the pulp fibers, and examples thereof include a method consisting of allowing decomposed constituent materials to separate by sedimentation by using differences in specific gravity between the constituent materials, a method consisting of separating constituent materials that have decomposed into different sizes by passing through a wire mesh screen having a prescribed mesh size, and a method consisting of separating decomposed constituent materials with a cyclone-type centrifugal separator.

A considerable amount of superabsorbent polymer is present together with the separated pulp fibers. Superabsorbent polymer remaining in the separated pulp fibers is removed in the ozone treatment step following the separation step by decomposing the superabsorbent polymer, reducing in molecular weight and solubilizing.

The method of the present invention may also include a step for cleaning the used absorbent article and decomposing the used absorbent article into constituent materials by agitating the used absorbent article in an aqueous solution containing disinfectant or in water following the ozone treatment step (to also be simply referred to as the "cleaning/decomposition step").

Although the water used in the cleaning/decomposition step is not necessarily required to contain disinfectant, an aqueous solution containing disinfectant may be used. There are no particular limitations on the disinfectant and examples thereof include chlorine dioxide, acidic electrolyzed water and ozone water.

In the case of using an aqueous solution containing disinfectant, although there are no particular limitations on the concentration of disinfectant in the aqueous solution containing disinfectant provided disinfecting effects are demonstrated, the concentration is preferably 10 to 300 ppm by weight, more preferably 30 to 280 ppm by weight and even more preferably 50 to 250 ppm by weight. If the concentration is excessively low, adequate disinfecting effects are not demonstrated resulting in the risk of bacteria and other microorganisms remaining in the recovered pulp fibers. Conversely, if the concentration is excessively high, in addition to wasting disinfectant, there is the risk of damaging the pulp fibers and problems with safety.

Although there are no particular limitations on the agitation carried out in the cleaning/decomposition step provided residue of the absorbent article is cleaned and decomposed into constituent materials, agitation can be carried out using a washing machine, for example. There are also no particular limitations on agitation conditions provided residue of the absorbent article is cleaned and decomposed into constituent materials, and for example, the duration of agitation is preferably 5 to 60 minutes, more preferably 10 to 50 minutes and even more preferably 20 to 40 minutes.

In the cleaning/decomposition step, in addition to cleaning residue of the absorbent article from which superabsorbent polymer has been removed, the absorbent article is broken up and decomposed into constituent materials. Since hot melt adhesive used for the seams and so forth of the absorbent article is subjected to oxidative degradation by ozone water resulting in weakening of the bonding strength between constituent materials of the absorbent article in the aforementioned ozone water immersion step, the absorbent article can be easily decomposed into constituent materials by agitation in this cleaning/decomposition step. Disinfection by disinfectant also takes place in the case of using an aqueous solution containing disinfectant.

When carrying out antimicrobial agent treatment following the ozone treatment step, antimicrobial agent treatment can be carried out simultaneously in the cleaning/decomposition step by adding the aqueous solution containing disinfectant used in the cleaning/decomposition step or by adding a cationic antimicrobial agent. Namely, when carrying out antimicrobial agent treatment after the ozone treatment step, the aqueous solution containing disinfectant used in the cleaning/decomposition step or a cationic antimicrobial agent is preferably contained. Since the cationic antimicrobial agent is adsorbed to the pulp fibers and the pulp fibers are anionic, cationic antimicrobial agent adsorbed to the pulp fibers is not easily removed and the cationic antimicrobial agent remains in the ultimately obtained recycled pulp. Even so, small amounts of the cationic antimicrobial agent are released from the pulp fibers in each step as a result of having gone through a large number of steps during the time until the final step, and thus the content of cationic antimicrobial agent in the ultimately obtained recycled pulp decreases. Thus, antimicrobial agent treatment is preferably carried out at a stage that is as close to the final step as possible from the viewpoint of maintaining the content of cationic antimicrobial agent in the recycled pulp.

The method of the present invention may also include a step for separating pulp fibers from the decomposed used absorbent article following the cleaning/decomposition step (to also be simply referred to as the "pulp fiber separation step").

There are no limitations on the method used to separate the pulp fibers, and examples thereof include a method consisting of allowing decomposed constituent materials to separate by sedimentation by using differences in specific gravity between the constituent materials, a method consisting of separating constituent materials that have decomposed into different sizes by passing through a wire mesh screen having a prescribed mesh size, and a method consisting of separating decomposed constituent materials with a cyclone-type centrifugal separator.

The method of the present invention may also include a step for cleaning the separated pulp fibers following the pulp fiber separation step (to also be simply referred to as the "pulp fiber cleaning step").

There are no limitations on the method used to clean the separated pulp fibers, and for example, separation can be carried out by placing the separated pulp fibers into a mesh pouch and rinsing with water.

The method of the present invention may also include a step for desiccating the cleaned pulp fibers following the pulp fiber cleaning step (to also be simply referred to as the "pulp fiber desiccation step").

There are no limitations on the method used to desiccate the cleaned pulp fibers, and for example, desiccation can be carried out by desiccating the cleaned pulp fibers contained in a mesh pouch with a dryer.

Although the pulp fiber cleaning step and pulp fiber desiccation step may be carried out one time each, they may also be alternately carried out a plurality of times.

The method of the present invention may also include a step for drying the dehydrated pulp fibers following the pulp fiber desiccation step (to also be simply referred to as the "pulp fiber drying step"). Since pulp fibers obtained according to the method of the present invention are resistant to mold growth even in a wet state, it is not necessarily required to provide a drying step since the pulp fibers can be stored in a wet state without drying.

The method of the present invention may also include a step for separating and collecting plastic materials (to also be simply referred to as the "plastic material separation and collection step"). Here, plastic materials include non-woven fabric materials, film materials and elastomer materials. The plastic material separation and collection step can be carried out in parallel with the pulp fiber separation step after the aforementioned cleaning/decomposition step. The plastic material separation and collection step can include cleaning, desiccation and drying steps similar to the aforementioned pulp fiber cleaning step, pulp fiber desiccation step and pulp fiber drying step. The collected plastic materials can be reused as solid fuel after undergoing RPF conversion treatment.

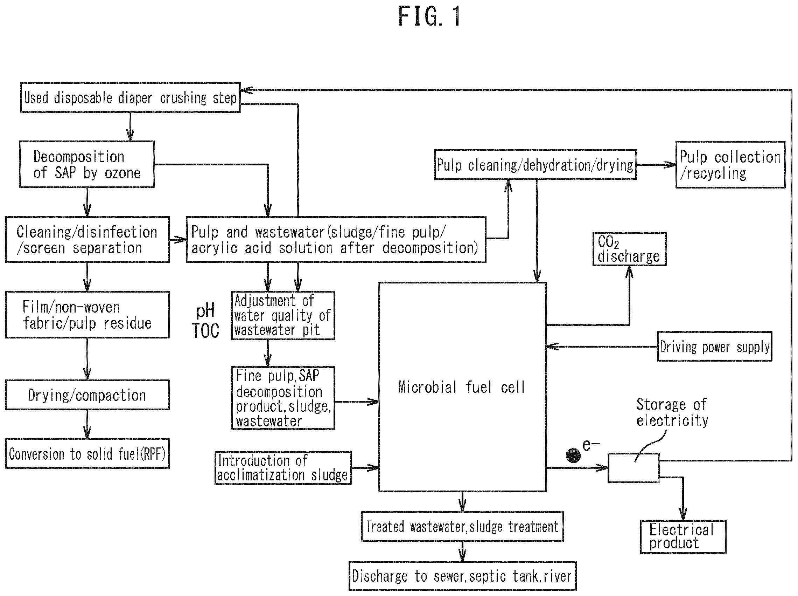

A flow chart of a recycling system that incorporates the method of the present invention is shown in FIG. 1. According to this recycling system, used absorbent articles such as used disposable diapers are first subjected to crushing and decomposition (and preferably in a state in which the SAP has been deactivated), followed by subjecting to ozone water treatment, cleaning, disinfection and screen separation to divide into a fraction mainly containing plastic and non-woven fabric and a fraction mainly containing pulp and wastewater. Furthermore, wastewater generated in the crushing/decomposition step and wastewater generated during the course of cleaning, disinfecting and screen separation may also be added to the fraction mainly containing pulp and wastewater as necessary. The plastic and non-woven fabric are converted to solid fuel (RPF). The fraction mainly containing pulp and wastewater is further separated into pulp and wastewater. The pulp is then cleaned, and preferably disinfected, deodorized and bleached followed by desiccation and drying to recover and recycle the pulp. The wastewater is introduced into the negative electrode chamber of a microbial fuel cell after having adjusted the pH and water quality in terms of TOC and the like. Wastewater generated as a result of cleaning the pulp is also introduced into the negative electrode chamber of a microbial fuel cell as necessary. In the microbial fuel cell, TOC in the wastewater is reduced while simultaneously collecting electric power by power generation. Wastewater for which TOC has been reduced may be subjected to additional purification treatment as necessary before being discharged into a sewer and the like.

The method of the present invention offers the advantages indicated below.

It is not necessary to continuously add microorganisms to the microbial fuel cell since the microorganisms grow spontaneously therein. It is only necessary to replenish the microorganisms in the case of a decrease in microbial activity.

Microbial (anaerobic) biodegradation makes it possible to reduce the amount of solids as well as detoxify (eliminate) pathogenic microorganisms.

Electric power can be generated and stored (when a battery has been installed) using a battery system.

Temperature is only required to be controlled at around room temperature (20°C to 40°C) in order to ensure an environment suitable for microbial activity.

Wastewater having a high COD concentration generated during the course of recycling treatment can be subjected to detoxification treatment by diluting to a fixed concentration or lower.

Used absorbent articles can be recycled without the need for specialized equipment by converting to the most universal energy resource in the form of electric power.

Used absorbent articles can be completely recycled (by recycling used absorbent articles into pulp fibers, RPF and electric power).

EXAMPLES

The following ozone water generator was used in the examples.

[Ozone Water Generator]

Manufacturer: Mitsubishi Electric Corp.
Name: Ozone generator
Model No.: OS-25V
Variable ozone water concentration range: 1 to 80 mg/m$^3$
Ozone water exposure tank volume: 30 L

[Treatment of SAP with Ozone Water]

Ozone gas having a concentration of 80 g/m$^3$ was blown into 20 L of a 1% aqueous citric acid solution containing 150 g of SAP for 1 hour to decompose the SAP. The treated water quality after treating for 1 hour was such that TOC concentration was 3700 mg/L, pH was 2.5 and ozone water concentration was 16.8 pm by weight.

[Preparation of Ozone Treatment Wastewater]

Ozone treatment wastewater following decomposition of SAP was diluted with tap water to prepare two types of wastewater having a TOC concentration of about 500 mg/L and a TOC concentration of about 1000 mg/L followed by additionally adjusting the pH of the wastewater diluted to a TOC concentration of about 500 mg/L to about 6.5, 6.0, 5.5, 5.0 and 3.0 with 5 N NaOH. The pH values, TOC concentrations and ozone concentrations of the ozone treatment wastewater following preparation are shown in Table 1.

[Microorganisms]

The microorganisms used in the examples consisted of a sludge composed of a mixed microbial population that demonstrates polymerase activity against such substances as cellulose and pectin, demonstrates a high level of self-aggregation, has an $SV_{30}$ value, which is a sedimentation coefficient that indicates sedimentation and separation of microorganisms and purified water, of about 20% to 40%, and constitutes a composite system of wild yeast such as Hansenula, Kluybaromyces, Candida, Trichosporon, Pichia, Yarrowia and Debaryomyces species along with other aerobic bacteria normally contained in activated sludge. This population constitutes a mixed microbial sludge having a high level of cellulose decomposition activity that was cultured and acclimated for three years or longer using carboxymethyl cellulose as a carbon source and acclimated for two years or longer with crushed pulp as well.

[Microbial Decomposition of TOC]

After filling 1 L of sludge composed of the aforementioned microorganisms having a concentration of 1.6 g-MLSS/L into a 2 L graduated cylinder, a total of 1 L of the aforementioned ozone treatment wastewater was injected at a flow rate of 0.5 L/d over the course of 2 days. TOC concentration was measured after treatment (after 2 days) followed by calculation of TOC decomposition rate. The results are shown in Table 1.

Decomposition of TOC by microbial treatment (water quality purification) was confirmed to be able to efficiently decompose TOC at a pH of 2 to 7 and concentration of 1080 mg/L or less. In addition, treatment was also determined to be possible even at higher TOC concentrations although efficiency was somewhat worse. Treating at a TOC concentration of 10,000 mg/L or less is preferable in terms of favorable treatment time efficiency. Treatment at a TOC concentration of 5,000 mg/L or less is more preferable.

[TOC Decomposition Rate and Fluctuations in pH]

After filling 1 L of sludge composed of the aforementioned microorganisms having a concentration of 1.6 g-MLSS/L into a 2 L graduated cylinder, ozone treatment wastewater adjusted to pH of 2.95 and TOC concentration of 537 mg/L was injected at a flow rate of 0.5 L/d followed by investigating time-based changes in TOC decomposition rate and fluctuations in pH within the tank. The results are shown in Table 2.

The pH within the tank was determined to become increasingly alkaline as decomposition of TOC progressed, and since the power generation efficiency of fuel cells is known to decrease under alkaline conditions, it is important to control the decomposition rate so that the pH can be maintained at a pH of lower than 8 following treatment. The optimum decomposition rate is 80% or more, and the pH in the tank following treatment is preferably lower than 8.0.

On the basis of the above results, in order to carry out water quality purification and power generation treatment on recycling treatment wastewater with a microbial fuel cell, water purification treatment can be carried out efficiently if the TOC decomposition rate is made to be 80% or more by adjusting the water quality when introducing the wastewater into the treatment tank to a TOC concentration of 10,000 mg/L or less and adjusting the pH to 2.0 to 7.0. Treatment can be carried out without impairing power generation efficiency of the microbial fuel cell by controlling wastewater concentration and flow rate so that the pH within the treatment tank does not become alkaline. In addition, since microbial fuel cell treatment consists of anaerobic treatment, aeration in the manner of conventional activated sludge treatment is not required, thereby making it possible to reduce the cost of electric power required for treatment. As a result, simultaneous to water quality purification, electric power can be collected by power generation from recycling treatment wastewater containing waste that was conventionally not recycled and primarily responsible for the increased burden on purification treatment, thereby enabling used absorbent articles to be completely recycled.

Table 1

| pH | Ozone concentration before treatment (ppm) | TOC before treatment (mg/L) | TOC after treatment (mg/L) | Decomposition rate (%) |
|---|---|---|---|---|
| 6.5 | 0.0 | 600 | 30 | 95 |
| 6.0 | 0.0 | 570 | 6 | 99 |
| 5.5 | 0.0 | 560 | 99 | 82 |
| 5.1 | 0.0 | 556 | 2 | 100 |
| 3.0 | 0.0 | 676 | 104 | 85 |
| 2.2 | 0.0 | 1080 | 128 | 88 |

Table 2

| Treatment time (h) | 12 | 16 | 20 |
|---|---|---|---|
| Ozone concentration before treatment (ppm) | 0 | 0 | 0 |
| pH before treatment | 3.0 | 3.0 | 3.0 |
| TOC before treatment (ppm) | 537 | 537 | 537 |
| TOC after treatment (ppm) | 16.6 | 15.3 | 3.3 |
| TOC decomposition rate (%) | 96.9 | 97.2 | 99.4 |
| pH after treatment | 8.0 | 7.9 | 8.0 |

[Treatment by Microbial Fuel Cell]

In the microbial fuel cell shown in FIG. 2, an acrylic cylinder having a volume of 1.6 L was used for the negative electrode reaction tank 3, a single Biocord™ (TBR Co., Ltd., diameter: 45 mm) having a length of 29 cm obtained by weaving together bundles of carbon fiber braids was used for the negative electrode 4, and platinum thin film-coated carbon paper (ElectroChem Inc., EC-20-10-7) cut into the shape of a circle having a diameter of 79 mm was used for the positive electrode 7. NeoSepta CMS manufactured by Astom Corp. cut into the shape of a circle having a diameter of 79 mm was used for the proton exchange membrane 5, and this was affixed to an opening formed in the side of the negative electrode reaction tank 3 followed by immobilizing the outer periphery with waterproof tape and simultaneously affixing the positive electrode to the upper surface of the positive electrode tank. The negative electrode 4 and the positive electrode 7 were connected with titanium wire (diameter: 0.3 mm) and generated current was recorded on a monitor with the tester 8 connected to the personal computer 9.

The aforementioned microorganisms were filled into the negative electrode reaction tank 3 and a decomposition test was started at a total volume of 1.6 L including the microorganisms. Ozone treatment wastewater having a TOC concentration of 240 ppm by weight (residual ozone: 0 ppm) (wastewater obtained following ozone treatment of used disposable diapers) was continuously injected into the negative electrode reaction tank 3 for 21 days at a flow rate of 0.8 L/24 hours and wastewater was discharged from the negative electrode reaction tank 3 at the same flow rate followed by confirmation of current generation and water quality purification (reduction in TOC).

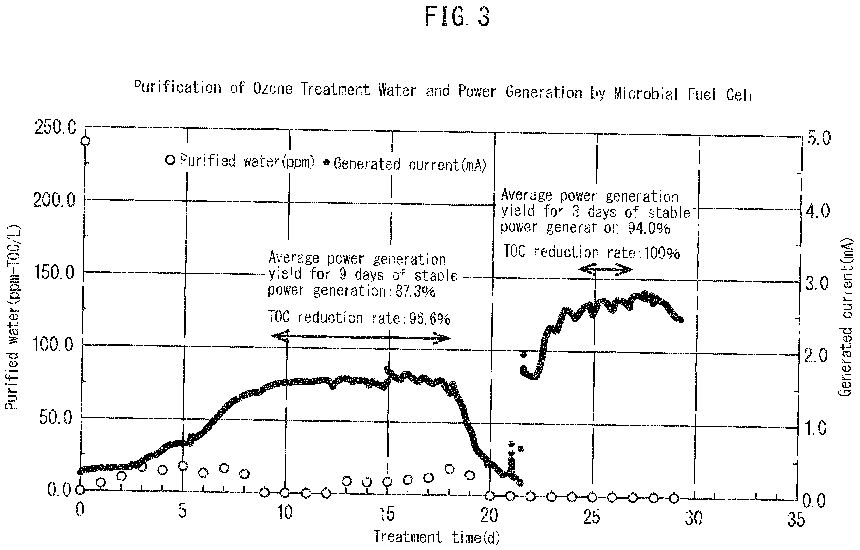

In addition, the positive electrode was replaced with a new electrode starting on day 22 of continuous injection and ozone treatment water (residual ozone: 0 ppm) was continuously injected into the negative electrode reaction tank 3 for 8 days at a flow rate of 1.2 L/24 hours followed by discharging from the negative electrode reaction tank 3 at the same flow rate and confirming current generation and water quality purification (reduction in TOC). The results are shown in FIG. 3.

Generated current yield was calculated in the manner indicated below.

First, the theoretical value of generated current yield was calculated.

Conversion of TOC to COD:

$$TOC\ 240\ ppm \times 2.2 = COD\ 528\ ppm$$

Conversion to quantity of electrons per 24 hours when treating 0.8 L of wastewater:

$$COD\ 528\ ppm \times 0.8\ L/24\ h \times 4\ e^- = 1.690\ mol \cdot e^-/24\ h$$

Conversion to quantity of coulombs:

$$1.690 \times 96500\ C/mol = 1.630\ C/24\ h$$
$$= 1.89\ mC/s \qquad (1)$$

Conversion to quantity of electrons per 24 hours when treating 1.2 L of wastewater:

$$COD\ 528\ ppm \times 1.2\ L/24\ h \times 4\ e^- = 2.5344\ mol \cdot e^-/24\ h$$

Conversion to quantity of coulombs:

$$2.5344 \times 96500\ C/mol = 2.4457\ C/24\ h$$
$$= 2.83\ mC/s \qquad (2)$$

Next, actual yield was calculated.

(During treatment of 0.8 L of wastewater per 24 hours)

Average generated current value for total of 21 days from start of experiment was 1.06 mA (maximum value: 1.73 mA, minimum value: 0.17 mA).

The average generated current for 9 stable days (days 10 to 18) was 1.65 mA (maximum value: 1.73 mA, minimum value: 1.43 mA).

Since generated current is expressed as A = C/s, the average generated current for 9 stable days (days 10 to 18) becomes:

$$1.65 \text{ mA} = 1.65 \text{ mC/s.} \qquad\qquad (3)$$

Then, based on (1) and (3):

$$\text{Generated current yield} = \text{measured value/theoretical value} = 1.65/1.89 = 87.3\%$$

(During treatment of 1.2 L of wastewater per 24 hours)

Average generated current value for total of 8 days from start of experiment was 2.48 mA (maximum value: 2.83 mA, minimum value: 1.63 mA).

The average generated current for 3 stable days (days 24 to 27) was 2.66 mA (maximum value: 2.83 mA, minimum value: 2.54 mA).

Since generated current is expressed as A = C/s, the average generated current for 3 stable days (days 24 to 27) becomes:

$$2.66 \text{ mA} = 2.66 \text{ mC/s.} \qquad\qquad (4)$$

Then, based on (2) and (4):

$$\text{Generated current yield} = \text{measured value/theoretical value} = 2.66/2.83 = 94.0\%$$

INDUSTRIAL APPLICABILITY

The method of the present invention can be preferably used in a recycling system for used absorbent articles such as disposable diapers.

BRIEF DESCRIPTION OF REFERENCE SYMBOLS

1    Ozone treatment wastewater tank
2    Pump
3    Negative electrode reaction tank
4    Negative electrode
5    Proton exchange membrane
6    Positive electrode tank
7    Positive electrode
8    Tester
9    Personal computer
10   Sludge sedimentation tank
11   Pump
12   Purified water tank

## Claims

1. A method for recycling a used absorbent article comprising superabsorbent polymers, in which at least one of the materials constituting the absorbent article is collected and recycled from the used absorbent article, wherein the method comprises:
an ozone treatment step of treating a used absorbent article with ozone water,
**characterized in that** the method further comprises:

   an ozone concentration adjustment step of adjusting an ozone concentration of wastewater from the ozone treatment step to 0.1 ppm by weight or less;
   a pH adjustment step of adjusting pH of the wastewater from the ozone treatment step to 2.0 to 7.0; and
   a microbial fuel cell step of introducing the ozone concentration-adjusted and pH-adjusted wastewater into a microbial fuel cell to reduce TOC concentration in the wastewater and collect electric power by power generation.

2. The method according to claim 1, wherein pH of wastewater from the microbial fuel cell step is lower than 8.0.

3. The method according to claim 1 or claim 2, further comprising a step of adjusting a TOC concentration of the wastewater from the ozone treatment step to 10,000 mg/L or less.

4. The method according to any one of claims 1 to 3, wherein a TOC concentration of wastewater from the microbial fuel cell step is 2000 mg/L or less.

## Patentansprüche

1. Verfahren zum Recycling eines benutzten absorbierenden Artikels, der superabsorbierende Polymere umfasst, in dem mindestens eines der Materialien, die den absorbierenden Artikel bilden, aus dem benutzten absorbierenden Artikel gesammelt und recycelt wird, wobei das Verfahren Folgendes umfasst:
einen Ozonbehandlungschritt zur Behandlung eines benutzten absorbierenden Artikels mit Ozonwasser,
**dadurch gekennzeichnet, dass** das Verfahren weiter Folgendes umfasst:

   einen Einstellungsschritt der Ozonkonzentration zur Einstellung einer Ozonkonzentration von Abwasser aus dem Ozonbehandlungsschritt auf 0,1 ppm, bezogen auf das Gewicht, oder weniger;
   einen pH-Einstellungsschritt zur Einstellung des pH des Abwassers aus dem Ozonbehandlungsschritt auf 2,0 bis 7,0; und
   einen Schritt der mikrobiellen Brennstoffzelle zur Einführung des Ozonkonzentration-eingestellten und pH-eingestellten Abwassers in eine mikrobielle Brennstoffzelle, um die TOC-Konzentration in dem Abwasser zu reduzieren und elektrische Energie durch Energieerzeugung abzunehmen.

2. Verfahren nach Anspruch 1, wobei der pH von Abwasser aus dem Schritt der mikrobiellen Brennstoffzelle niedriger ist als 8,0.

3. Verfahren nach Anspruch 1 oder Anspruch 2, das weiter einen Schritt der Einstellung einer TOC-Konzentration des Abwassers aus dem Ozonbehandlungsschritt auf 10 000 mg/l oder weniger umfasst.

4. Verfahren nach einem der Ansprüche 1 bis 3, wobei eine TOC-Konzentration des Abwassers aus dem Schritt der mikrobiellen Brennstoffzelle 2000 mg/l oder weniger beträgt.

## Revendications

1. Procédé de recyclage d'un article absorbant usagé comportant des polymères à fort pouvoir absorbant, dans lequel au moins l'un des matériaux constituant l'article absorbant est collecté et recyclé en provenance de l'article absorbant usagé, dans lequel le procédé comporte :
une étape de traitement à l'ozone servant à traiter un article absorbant usagé avec de l'eau ozonisée,
**caractérisé en ce que** le procédé comporte par ailleurs :

   une étape d'ajustement de concentration en ozone servant à ajuster une concentration en ozone des eaux usées provenant de l'étape de traitement à l'ozone jusqu'à 0,1 ppm en poids ou moins ;
une étape d'ajustement de pH servant à ajuster le pH des eaux usées provenant de l'étape de traitement à l'ozone jusqu'à 2,0 à 7,0 ; et
une étape de pile à combustible microbienne servant à introduire les eaux usées ajustées en termes de concentration en ozone et ajustées en termes de pH dans une pile à combustible microbienne pour réduire la concentration en COT dans les eaux usées et collecter l'énergie électrique par la production d'énergie.

2. Procédé selon la revendication 1, dans lequel le pH des eaux usées provenant de l'étape de pile à combustible microbienne est inférieur à 8,0.

3. Procédé selon la revendication 1 ou la revendication 2, comportant par ailleurs un étape consistant à ajuster une concentration en COT des eaux usées provenant de l'étape de traitement à l'ozone jusqu'à 10 000 mg/L ou moins.

4. Procédé selon l'une quelconque des revendications 1 à 3, dans lequel une concentration en COT des eaux usées provenant de l'étape de pile à combustible microbienne est de 2000 mg/L ou moins.

## FIG. 1

FIG. 2

FIG. 3

Purification of Ozone Treatment Water and Power Generation by Microbial Fuel Cell

EP 3 238 840 B1

**EP 3 238 840 B1**

**Patent documents cited in the description**

- WO 2006134941 A1
- JP 2001047023 A
- JP 2014217835 A
- JP 2006272203 B
- WO 2013144660 A2
- WO 2012039464 A1
- JP 2013145660 A
- US 2006147763 A1